# EUROPEAN PATENT SPECIFICATION

(11) **EP 3 336 273 B1**
(45) Date of publication and mention of the grant of the patent: **01.07.2020**
(21) Application number: 17207061.7
(22) Date of filing: 13.12.2017
(51) Int. Cl.: E04B 9/04, F24D 3/16

(54) **CEILING-MOUNTED RADIATING PANEL**
DECKENMONTIERTES STRAHLUNGSPANEL
PANNEAU RAYONNANT MONTÉ AU PLAFOND

(30) Priority: 16.12.2016 IT 201600127254
(43) Date of publication of application: 20.06.2018
(73) Proprietor: Errevi S.R.L., 31030 Carbonera (IT)
(72) Inventor: VISENTIN, Renzo, 31100 TREVISO (IT)
(74) Representative: Modiano, Micaela Nadia

(56) References cited:
- EP-A1- 1 489 241
- DE-A1- 2 624 538
- DE-A1-102014 014 828
- FR-A1- 2 875 520
- US-A- 5 042 570
- US-A1- 2012 125 562

## Description

The present invention relates to a ceiling-mounted radiating panel for the heating and cooling of indoor spaces.

Ceiling-mounted radiating panels of the so-called "sandwich type" are currently known which are preassembled and provided on a support made of SEP (sintered expanded polystyrene), which is known for its characteristics of very low heat conductivity, or made of other insulating materials, on which a multilayer pipe is fixed and/or inserted and on which a plasterboard panel is then glued.

These panels are provided in modules of various sizes, substantially comprised in a range from 600 x 2,000 millimeters up to 1,200 x 2,400 millimeters.

These modular panels require two or more quick-coupling connections of the pipes between one panel and the other.

One drawback that is observed in the background art resides in that said modular panels require a large number of connectors, which can reach 120 connectors every 80 square meters, entailing both an increase in production costs due to an increase in the number of components required to provide the panel itself and a high risk of leaks of the hydraulic circuit, which consequently causes a reduction in performance in terms of energy efficiency.

A further drawback resides in that said modular panels with plasterboard of the known type can reach a weight of even 15 kilograms per square meter, being thus particularly heavy, and make them difficult and laborious to handle and install on the part of the installation technicians, with a consequent increase in installation times and costs.

Another drawback resides in that said ceiling-mounted radiating panels can use only tubes that have certain diameters, for example 14, 16, 17 millimeters.

EP 1489241 A1 and US 5042570 are also known; the former, however, describes a panel intended only for thermal or acoustic insulation [as described in paragraph 0006 and in paragraph 0013] and not a radiating panel for the heating and cooling of indoor spaces.

Accordingly, EP 1489241 A1 deals with a different technical problem, since for example it has no aim of providing a panel with high performance in terms of energy efficiency both in heating and in cooling; in fact, said panel is surrounded by metallic surfaces: its upper surface is in contact with the metal plate, while the lower and lateral surfaces are covered by the metallic covering in order to allow the support of the panel on an adjacent one by means of the magnetic strips that are recessed laterally in the sides of the fixing and supporting element, which in turn is associated with the metal plate.

The fact that the panel is surrounded by metallic elements causes the panel to vary its temperature rapidly in response to variations in the external temperature or to a source of heating/cooling constituted by the duct, which is arranged in air between two sides of two adjacent panels; the panel therefore has high heat conductivity and low thermal resistance, characteristics which therefore make it unsuitable to be used as a radiating panel.

Furthermore, in EP 1489241 A1 the fixing and support system (in the sides of which the magnetic strips are recessed) is an element that is external to the panel and must be fixed beforehand to the metal plate by means of an adhesive, by welding, for example by laser welding, with screws, etc. [as described in paragraph 0022 from line 52 of page 4 to line 14 of page 5 of EP 1489241 A1].

US 5042570 describes a metallic ceiling-mounted structure which comprises a metallic frame constituted by longitudinal girders and cross girders, which comprise tiles made of sheet metal which are suspended and comprise heat exchanger elements, comprising a pipe and a profiled guide, which are arranged above the tiles and are anchored to the guide by means of holding magnets [as described on page 1 from line 7 to line 12 and on page 5 from line 30 to line 44].

Therefore, US 5042570 does not describe a radiating panel with high performance in terms of energy efficiency in heating and in cooling, since the heat exchangers are in contact with metallic elements (the tiles) which cause a rapid variation in the temperature of the exchangers in response to a variation in the external temperature or to a source of heat/cooling constituted by the pipe.

The aim of the present invention is to eliminate the drawbacks described above, providing a ceiling-mounted radiating panel that is self-supporting and has a high performance in terms of energy efficiency both in heating and in cooling.

Within this aim, an object of the present invention is to obtain a ceiling-mounted radiating panel that can be modulated, has a continuous hydraulic circuit that has no connections between one panel and the other, reduces production costs and improves performance in terms of energy efficiency both in heating and in cooling.

Another object of the invention is to have easy handling and installation thereof on the part of installation technicians and allow to reduce installation costs.

Another object of the invention is to provide a ceiling-mounted radiating panel that allows to obtain a high thermal efficiency and a low thermal inertia.

Another object is to devise a ceiling-mounted radiating panel that ensures high active surface coverage and high reliability.

A further object is to obtain a ceiling-mounted radiating panel that adapts to various architectural requirements, can use pipes of diameters that are different from the ones that are used generally and can use various finishes.

Another object is to obtain an invention that is structurally simple, has modest manufacturing costs, and can be provided with usual known systems and with traditional layout systems.

This aim, these objects and others which will become better apparent hereinafter are achieved by a ceiling-mounted radiating panel, particularly for heating and cooling indoor spaces, as defined in claim 1.

Further characteristics and advantages of the invention will become better apparent from the detailed description of a particular but not exclusive embodiment, illustrated by way of nonlimiting example in the accompanying drawings, wherein:

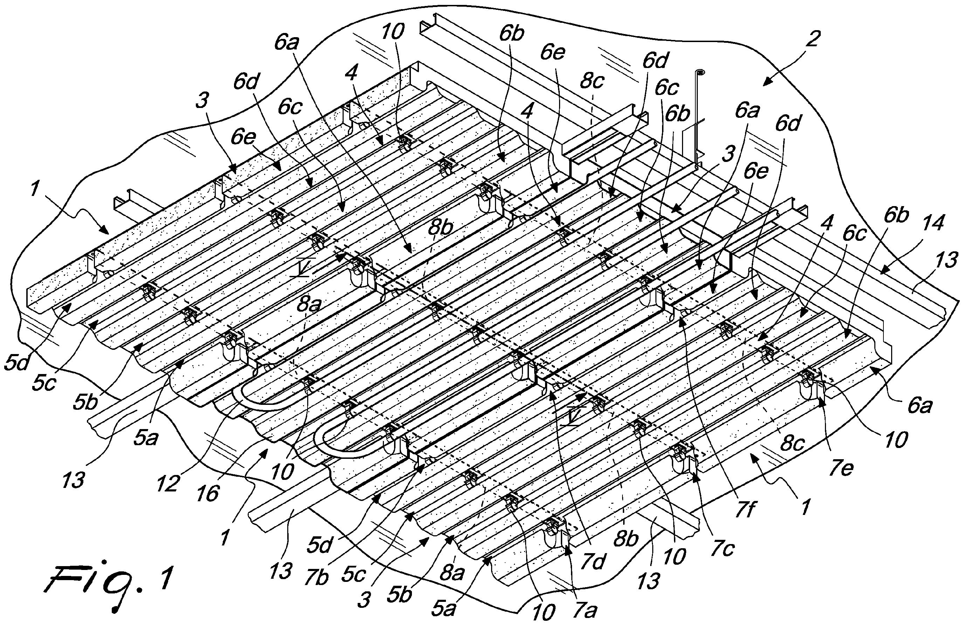

Figure 1 is a lateral perspective view from below of three radiating panels associated with the ceiling, in one of which a pipe is arranged;

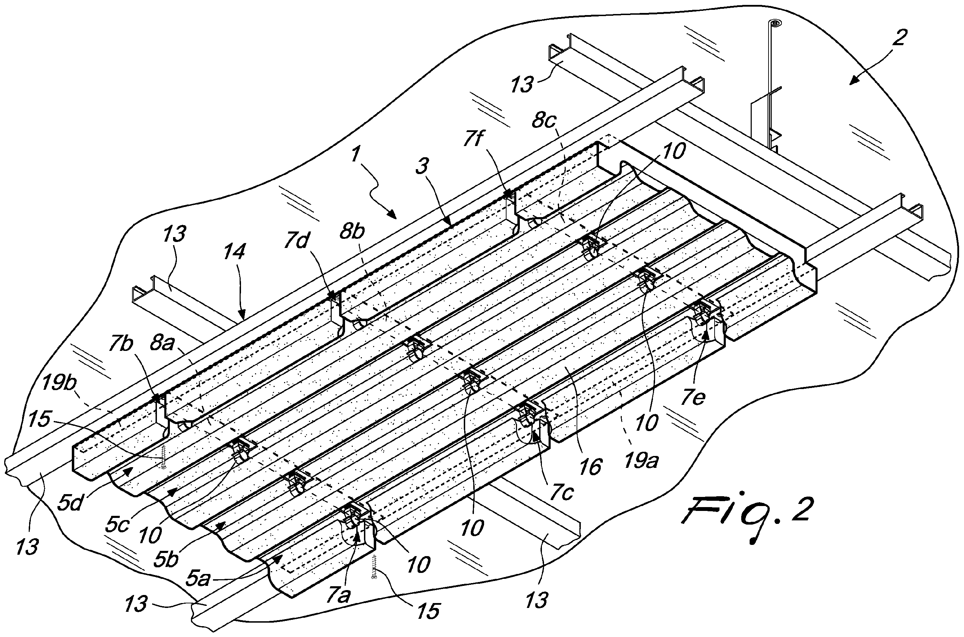

Figure 2 is a lateral perspective view from above of a single radiating panel associated with the ceiling;

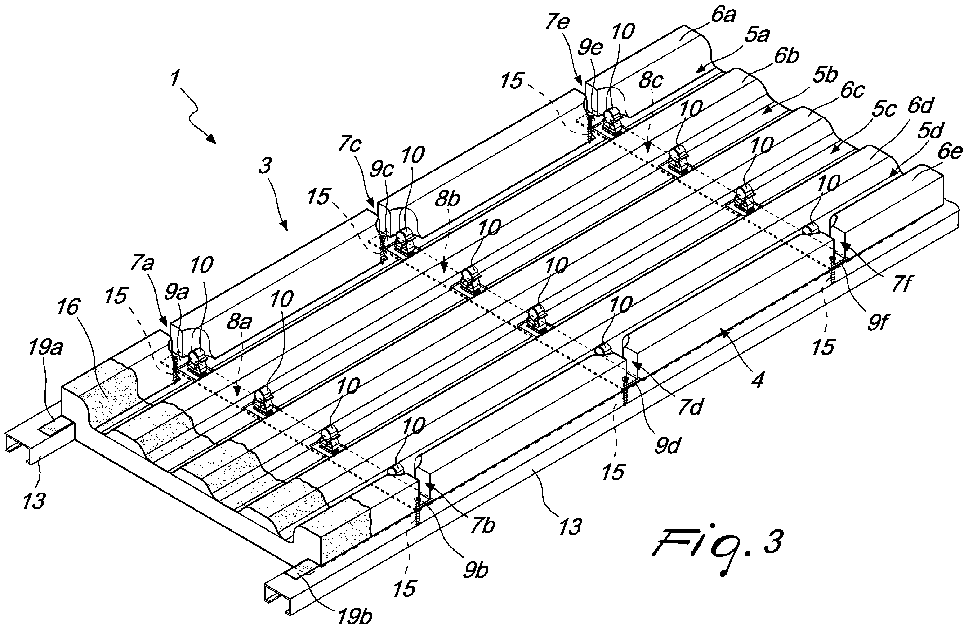

Figure 3 is an inverted lateral perspective view from below of a single radiating panel associated with the frame;

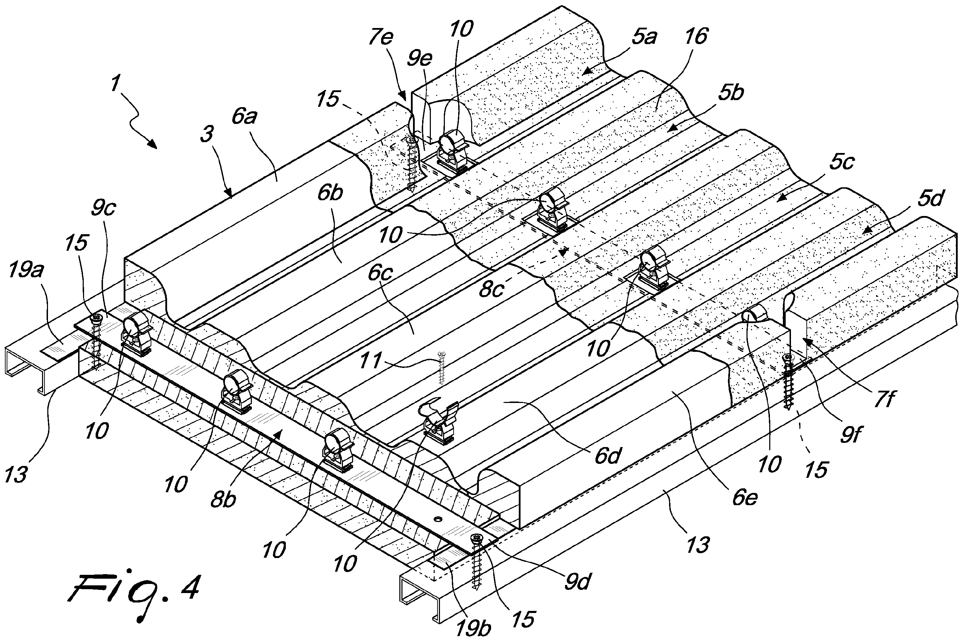

Figure 4 is a partially sectional view of the preceding figure;

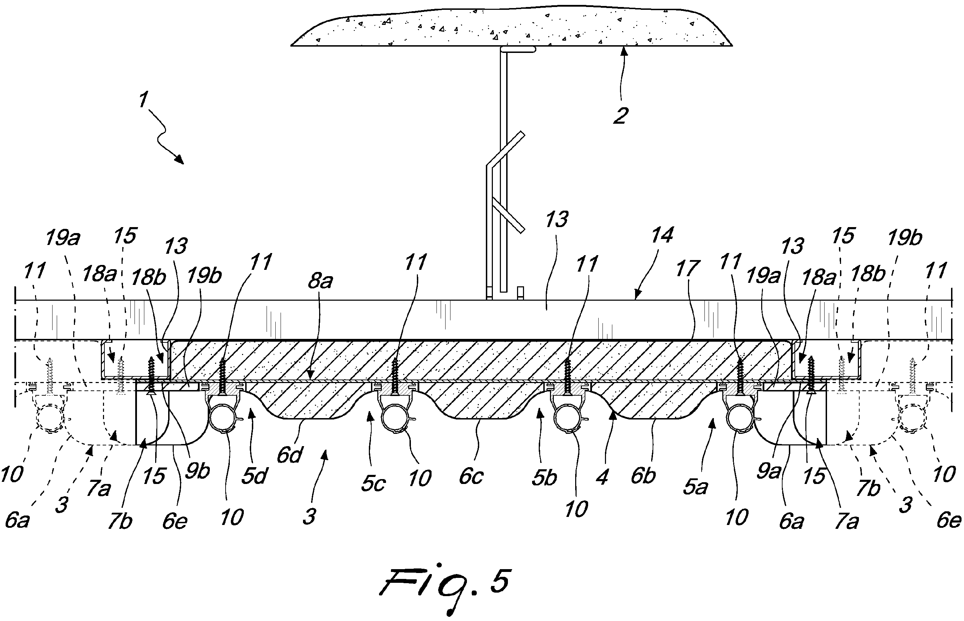

Figure 5 is a sectional view of the panel, taken along the sectional plane V-V of Figure 1, without the pipe;

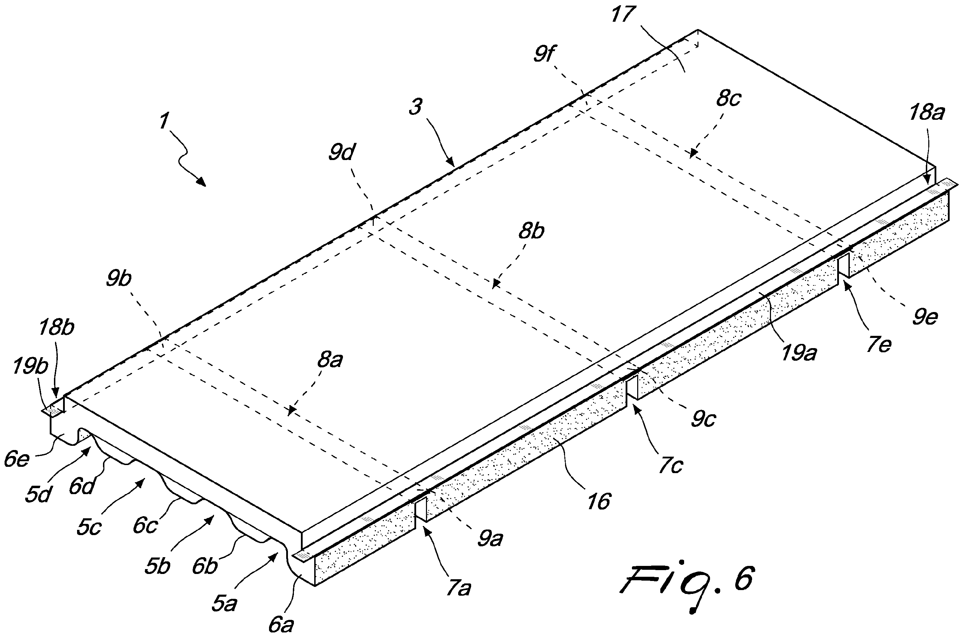

Figure 6 is a lateral perspective view from above of the panel;
Figure 7 is a view of a constructive variation of the panel.

In the examples of embodiment that follow, individual characteristics, given in relation to specific examples, may actually be interchanged with other different characteristics that exist in other examples of embodiment.

Moreover, it is noted that anything found to be already known during the patenting process is understood not to be claimed and to be the subject of a disclaimer.

With reference to the figures, the numeral 1 designates a ceiling-mounted radiating panel 2, particularly for the heating and cooling of indoor spaces.

The panel 1 comprises a support 3 made of sintered expanded polystyrene (SEP), pure or mixed with insulating materials, such as for example graphite, adapted to improve the heat resistance of said panel 1.

The support 3 advantageously has the chosen and appropriate shape and the chosen and appropriate dimensions depending on the specific requirements and in particular on the shape of the ceiling 2 to which it will be stably connected and of the walls adjacent thereto.

By way of nonlimiting example, the support 3 is substantially shaped like a parallelepiped.

The support 3 has a lower surface 4 on which one or more longitudinal channels 5a, 5b, 5c, 5d are provided which run along the entire length of the lower surface 4 and are evenly mutually spaced.

Four channels 5a, 5b, 5c, 5d have been indicated in the illustrated solution by way of example.

The lower surface 4 therefore has, laterally to each of said one or more channels 5a, 5b, 5c, 5d, a longitudinal prominence 6a, 6b, 6c, 6d, 6e, which is also extended along the entire length of the lower surface 4.

The lower surface 4 therefore has, in a transverse cross-section, a substantially sinusoidal configuration.

The number and dimensions of the one or more channels 5a, 5b, 5c, 5d and the spacing between them, and therefore the number and dimensions of the prominences 6a, 6b, 6c, 6d, 6e and their spacing, advantageously vary according to the specific requirements.

The prominences 6a, 6e arranged at the lateral ends of the support 3, also known as outer prominences 6a, 6e, have, along a same transverse axis, a plurality of openings 7a, 7b, 7c, 7d, 7e, 7f which face each other in pairs and have such a depth as to have a bottom that lies at the bottom of each one of the one or more channels 5a, 5b, 5c, 5d.

Three pairs of openings 7a, 7b, 7c, 7d, 7e, 7f have been indicated by way of example in the illustrated solution.

Multiple planar metallic blades 8a, 8b, 8c are stably arranged transversely to the lower surface 4, so as to affect in view the bottom of the one or more channels 5a, 5b, 5c, 5d and of the openings 7a, 7b, 7c, 7d, 7e, 7f, and are extended along the entire width of the support 3.

Three metallic blades 8a, 8b, 8c have been designated by way of example in the illustrated solution.

The metallic blades 8a, 8b, 8c pass through the prominences 6b, 6c, 6d interposed between the channels 5a, 5b, 5c, 5d, also known as inner prominences 6b, 6c, 6d, have a substantially rectangular plan shape and are preferably made of zinc-coated steel.

The free ends 9a, 9b, 9c, 9d, 9e, 9f of the metallic blades 8a, 8b, 8c are accommodated in the openings 7a, 7b, 7c, 7d, 7e, 7f of the outer prominences 6a, 6e.

The metallic blades 8a, 8b, 8c are adapted to support a plurality of fixing means 10, such as for example clips of the known type, which are associated stably with the metallic blades 8a, 8b, 8c by means of a chemical or mechanical system, such as for example a first screw 11.

The clips 10 are adapted to lock, by means of a simple pressure applied by the installation technician, a pipe 12 adapted to be arranged in the channels 5a, 5b, 5c, 5d and to surmount the inner prominences 6b, 6c, 6d with a curvature substantially of approximately 180° in transition from one channel to another.

In a different constructive solution, not shown, at the inner prominences 6b, 6c, 6d there are seats which are shaped like an arc of substantially approximately 180° in which the pipe 12 is arranged in the transition from one channel to another.

The metallic blades 8a, 8b, 8c are also adapted to fix the support 3 to longitudinal members 13 of a metallic supporting frame 14, which is stably connected to the ceiling 2.

The fixing of the metallic blades 8a, 8b, 8c to the longitudinal members 13 occurs by means of a plurality of fixing elements, such as for example second screws 15, which are adapted to be arranged at the openings 7a, 7b, 7c, 7d, 7e, 7f of the outer prominences 6a, 6e of the support 3 so as to affect the ends 9a, 9b, 9c, 9d, 9e, 9f of the metallic blades 8a, 8b, 8c.

At the entire lower surface 4 of the support 3, except for the region that surrounds the fixing means 10 and the openings 7a, 7b, 7c, 7d, 7e, 7f of the outer prominences 6a, 6e, a low-emissivity metallized film 16 is coupled stably and is adapted to improve the performance of the panel 1 both in terms of yield and in terms of thermal inertia.

Furthermore, the support 3 is provided with a planar upper surface 17 that has, at the external longitudinal perimetric edges, a rabbet 18a, 18b which is extended along the entire length of the support 3.

Each rabbet 18a, 18b is shaped complementarily with respect to the longitudinal members 13 of the metallic frame 14 mounted on the ceiling 2 and has a step-like shape which has a height that is substantially equal to the height of the longitudinal members 13 and a width that is substantially equal to approximately half the width of the longitudinal numbers 13, so that the longitudinal member 13 is accommodated in the two rabbets 18a, 18b of two laterally adjacent panels 1.

A magnetic strip 19a, 19b is stably connected at each rabbet 18a, 18b by means of a double adhesive and is extended along the entire length of the support 3.

The magnetic strip 19a, 19b has such a magnetic attraction and/or adhesion force as to keep the panel 1 fixed to the longitudinal members 13 of the frame 14 of the ceiling 2 during the positioning step.

The panel 1 is applied to the ceiling 2 as described hereinafter.

The support 3, on which the fixing means 10 have already been coupled beforehand, is associated initially by the installation technician with the longitudinal members 13 of the frame 14 of the ceiling 2 by means of the magnetic strips 19a, 19b associated with the rabbets 18a, 18b, which are shaped complementarily to the longitudinal members 13, and is permanently fixed stably also by means of the plurality of fixing elements 15, which are arranged at the openings 7a, 7b, 7c, 7d, 7e, 7f of the outer prominences 6a, 6e of the support 3.

The installation technician then mates the pipe 12 with the fixing means 10, such as for example with the clips 10, by applying simple pressure.

Finally, he couples the finishing panel, which can have different finishes, such as plasterboard, wood, metal or heat-stretched sheet.

It has thus been found that the invention has achieved the intended aims and objects, a radiating panel 1 mounted on a ceiling 2 having been obtained which is self-supporting and has a high performance in terms of energy efficiency both in heating and in cooling.

Furthermore, the panel 1 is of the type that can be modulated and has a continuous hydraulic circuit, by virtue of the fact that it has a single pipe 12, therefore without discontinuities, which runs along the channels 5a, 5b, 5c, 5d of one or more panels 1 and passes from one channel to the other either by surmounting the inner prominences 6b, 6c, 6d of the panels 1 or by arranging itself at adapted seats shaped like an arc of substantially approximately 180°, which are provided at the inner prominences 6b, 6c, 6d.

Furthermore, it has been found that the panel 1 has no connections between one panel and the other by virtue of the rabbets 18a, 18b and the magnetic strips 19a, 19b associated therewith: the rabbets 18a, 18b of two side-by-side panels 1 in fact have a shape that is adapted to accommodate the longitudinal members 13 of the frame 14 mounted on the ceiling 2; the magnetic strips 19a, 19b associate the panels 1 with the longitudinal members 13 of the frame 14 mounted on the ceiling 2.

Accordingly, it has been found that the production costs are low, since the components required to provide said panel 1 have been reduced.

Furthermore, it has been observed that the panel 1 improves performance in terms of energy efficiency both in heating and in cooling, by virtue of the absence of discontinuities in the hydraulic circuit, by virtue of the presence of the low-emissivity metallized film 16 at the lower surface 4 of the support 3, which is adapted to improve the performance of the panel 1 both in terms of yield and in terms of thermal inertia, and by virtue of the fact that the support 3 is preferably made of sintered expanded polystyrene (SEP), known for its very low heat conductivity characteristics, mixed with graphite, which improves the heat resistance of said panel 1.

The panel 1 therefore allows to obtain a high thermal efficiency and a low thermal inertia.

It has been found, moreover, that the panel 1 is easy to handle and install on the part of installation technicians, since the installation technician initially associates only the support 3, which is much lighter than the panels of the background art mounted with the insulating system, the pipe and the plasterboard, with the longitudinal numbers 13 of the frame 14 of the ceiling 2, and then couples the pipe 12 to the fixing means 10, such as for example to the clips 10, by applying a simple pressure, and finally couples the finishing panel.

The panel 1 therefore allows quick and easy installation thereof, which reduces installation times and costs.

Furthermore, it has been verified that the panel 1 ensures a high active surface covering and ensures higher reliability.

Finally, it has been observed that the panel 1 is adapted to various architectural requirements, since the support 3 can easily assume the chosen shape by means of ad hoc shaping or cutting, can use pipes of diameters that are different from the ones generally used simply by choosing the fixing means 10 having the most appropriate dimensions, according to the specific requirements, and can use various finishes, such as for example plasterboard, wood, metal or heat-stretched sheet.

The invention is of course susceptible of numerous modifications and variations, all of which are within the scope of the appended claims.

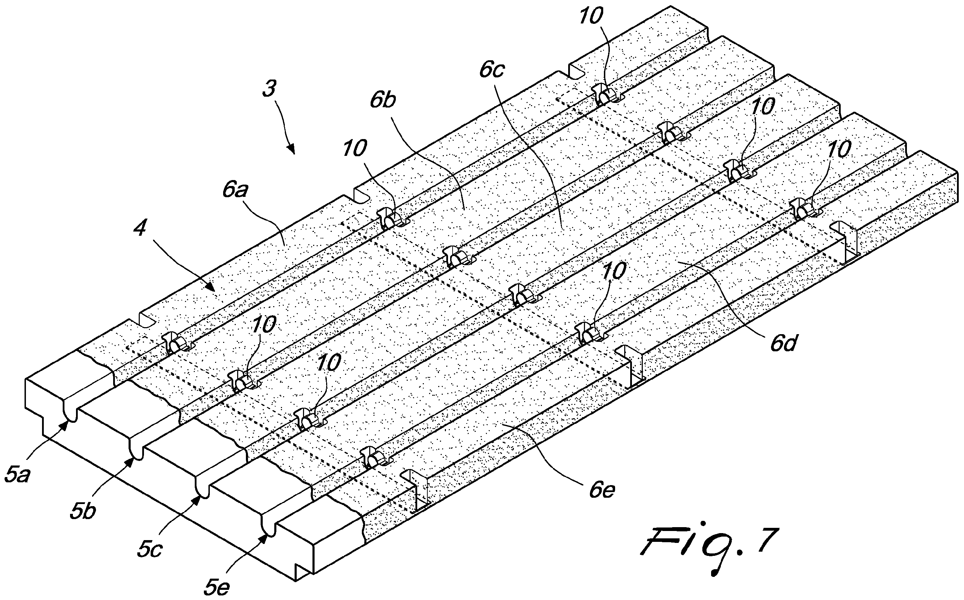

Thus, for example, as shown in Figure 7, the one or more longitudinal channels 5a, 5b, 5c, 5d that run along the entire length of the lower surface 4 and are mutually equidistant have, in transverse cross-section, such a width as to accommodate, between two of them, directly the fixing means 10 and the pipe 12, which can be arranged in said means; in this case, therefore, the prominences 6a, 6b, 6c, 6d, 6e have such a length as to be extended until they abut at the laterally adjacent fixing means 10.

The one or more channels 5a, 5b, 5c, 5d thus form a seat for the positioning of the pipe 12.

Furthermore, the lower surface 4 has a substantially planar shape.

Of course, the materials used, as well as the dimensions that constitute the individual components of the invention, may be more pertinent according to the specific requirements.

The characteristics indicated as advantageous, convenient or the like may also be omitted or be replaced with equivalents.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A radiating panel (1) to be mounted on a ceiling (2), particularly for heating and cooling indoor spaces, the radiating panel (1) comprising:
a support (3) made substantially of sintered expanded polystyrene,
a plurality of fixing means (10) for a pipe (12), and
a metallic supporting frame (14) comprising a plurality of longitudinal members (13),
wherein a plurality of metallic blades (8a, 8b, 8c) is positioned stably transversely to said support (3) both for the support of said plurality of fixing means (10) and for the fixing of said support (3) to said longitudinal members (13) of said frame (14), wherein at the outer longitudinal perimetric edges of said support (3) rabbets (18a, 18b) are provided to which a magnetic strip (19a, 19b) is stably connected, said rabbets (18a, 18b) being shaped complementarily to said longitudinal members (13) for interconnection of said support (3) to said frame (14).

2. The panel (1) according to claim 1, **characterized in that** said support (3) has a lower surface (4) that has, in a transverse cross-section, a substantially sinusoidal configuration so as to form one or more longitudinal channels (5a, 5b, 5c, 5d) interposed between one or more longitudinal prominences (6a, 6b, 6c, 6d, 6e), both being extended along the entire length of said lower surface (4).

3. The panel (1) according to claim 2, **characterized in that** said prominences (6a, 6e) arranged at the lateral ends of said support (3), also known as outer prominences (6a, 6e), have, along a same transverse axis, a plurality of openings (7a, 7b, 7c, 7d, 7e, 7f), in mutually facing pairs, which have such a depth as to have a bottom that lies at the bottom of each one of said one or more channels (5a, 5b, 5c, 5d).

4. The panel (1) according to one or more of the preceding claims, **characterized in that** said planar metallic blades (8a, 8b, 8c) are positioned stably transversely to said lower surface (4), so as to affect in view the bottom of said one or more channels (5a, 5b, 5c, 5d) and of said openings (7a, 7b, 7c, 7d, 7e, 7f) and extend along the entire width of said support (3), said metallic blades (8a, 8b, 8c) passing through said prominences (6b, 6c, 6d) interposed between said channels (5a, 5b, 5c, 5d), also known as inner prominences (6b, 6c, 6d), said metallic blades (8a, 8b, 8c) having a substantially rectangular plan shape, the free ends (9a, 9b, 9c, 9d, 9e, 9f) of said metallic blades (8a, 8b, 8c) being accommodated within said openings (7a, 7b, 7c, 7d, 7e, 7f) of said outer prominences (6a, 6e).

5. The panel (1) according to one or more of the preceding claims, **characterized in that** said fixing means (10) are associated stably with said metallic blades (8a, 8b, 8c) by means of a chemical or mechanical system (11) and are adapted to block said pipe (12), which in turn is adapted to be arranged at said channels (5a, 5b, 5c, 5d) and to surmount said inner prominences (6b, 6c, 6d) with a curvature of substantially 180° in the transition from one of said channels to another one of said channels or, as an alternative, arranging itself at adapted seats which are shaped like an arc of substantially 180° provided at said inner prominences (6b, 6c, 6d) for transition from one of said channels to another one of said channels.

6. The panel (1) according to one or more of the preceding claims, **characterized in that** said metallic blades (8a, 8b, 8c) are adapted to fix said support (3) to the longitudinal members (13) which constitute said supporting frame (14) which is metallic and connected stably to said ceiling (2), the fixing of said metallic blades (8a, 8b, 8c) to said longitudinal members (13) occurring by means of a plurality of fixing elements (15) which are adapted to be arranged at said openings (7a, 7b, 7c, 7d, 7e, 7f) of said outer prominences (6a, 6e) of said support (3), so as to affect said ends (9a, 9b, 9c, 9d, 9e, 9f) of said metallic blades (8a, 8b, 8c).

7. The panel (1) according to one or more of the preceding claims, **characterized in that** a low-emissivity metallized film (16) is stably coupled at the entire said lower surface (4) of said support (3), except for the region that surrounds said fixing means (10) and said openings (7a, 7b, 7c, 7d, 7e, 7f) of said outer prominences (6a, 6e), and is adapted to improve the performance of said panel (1) both in terms of yield and in terms of thermal inertia.

8. The panel (1) according to claim 1, **characterized in that** said support (3) has a planar upper surface (17) provided with said rabbets (18a, 18b) at the outer longitudinal perimetric edges and is extended along the entire length of said support (3), each one of said rabbets (18a, 18b) having a step-like shape which has a height that is substantially equal to the height of said longitudinal members (13) and a width that is substantially equal to half the width of said longitudinal members (13), so that said longitudinal member (13) is accommodated in two of said rabbets (18a, 18b) of two of said panels (1) arranged side by side.

9. The panel (1) according to claim 1, **characterized in that** said magnetic strip (19a, 19b), which is extended along the entire length of said support (3), is connected stably to each one of said rabbets (18a, 18b) by means of a double adhesive and is stably connected to said frame (14) by means of a magnetic fixing system which has such an attraction and/or adhesion force as to keep said panel (1) fixed during the positioning step.

10. The panel (1) according to claim 1, **characterized in that** said support (3) is made of sintered expanded polystyrene mixed with graphite.

11. The panel (1) according to one or more of the preceding claims, **characterized in that** said support (3), once said fixing means (10) have been coupled thereto, initially can be associated with said longitudinal members (13) of said frame (14) by means of said magnetic strips (19a, 19b) which are magnetically associated with said rabbets (18a, 18b) which are shaped complementarily to said longitudinal members (13), said support (3) being fixed stably to said longitudinal members (13) also by means of said fixing elements (15), arranged at said openings (7a, 7b, 7c, 7d, 7e, 7f) of said outer prominences (6a, 6e) of said support (3), said pipe (12) being subsequently associable with said fixing means (10), a finishing panel being then associable with said lower surface (4) of said panel (1).

12. The panel (1) according to claim 1, **characterized in that** said support (3) has a lower surface (4) which has, in a transverse cross-section, a substantially planar shape on which one or more longitudinal channels (5a, 5b, 5c, 5d) are provided which form a seat for said fixing means (10) and said pipe (12).

## Patentansprüche

1. Ein Strahlungspanel (1), zu montieren an einer Decke (2), insbesondere zum Heizen und Kühlen von Innenräumen, wobei das Strahlungspanel (1) Folgendes umfasst:
einen Träger (3), der im Wesentlichen aus gesintertem geschäumtem Polystyrol besteht,
eine Vielzahl von Befestigungsmitteln (10) für eine Rohrleitung (12) und
einen metallischen Tragrahmen (14), der eine Vielzahl langgestreckter Glieder (13) umfasst, wobei eine Vielzahl von Metalllamellen (8a, 8b, 8c) quer zu dem Träger (3) fest positioniert ist, sowohl zum Tragen der Vielzahl von Befestigungsmitteln (10) als auch zum Befestigen des Trägers (3) an den langgestreckten Gliedern (13) des Rahmens (14);
wobei an den äußeren länglichen Umfangskanten des Trägers (3) Anschlagleisten (18a, 18b) angebracht sind, mit denen ein Magnetstreifen (19a, 19b) fest verbunden ist; wobei die Anschlagleisten (18a, 18b) zur Verbindung des Trägers (3) mit dem Rahmen (14) komplementär zu den langgestreckten Gliedern (13) geformt sind.

2. Das Panel (1) gemäß Anspruch 1, **dadurch gekennzeichnet, dass** der Träger (3) eine untere Oberfläche (4) hat, die in einem transversalen Querschnitt im Wesentlichen eine Sinuskonfiguration hat, um einen oder mehrere längliche Kanäle (5a, 5b, 5c, 5d) zu bilden, die zwischen einer oder mehreren länglichen Erhöhungen (6a, 6b, 6c, 6d, 6e) angeordnet sind, wobei beide sich über die gesamte Länge der unteren Oberfläche (4) erstrecken.

3. Das Panel (1) gemäß Anspruch 2, **dadurch gekennzeichnet, dass** die Erhöhungen (6a, 6e), die an den seitlichen Enden des Trägers (3) angeordnet sind, auch als äußere Erhöhungen (6a, 6e) genannt, entlang einer selben Querachse eine Vielzahl von Öffnungen (7a, 7b, 7c, 7d, 7e, 7f) in einander gegenüberliegenden Paaren haben, die so tief sind, dass sie einen Boden haben, der am Boden jedes der einen oder mehreren Kanäle (5a, 5b, 5c, 5d) liegt.

4. Das Panel (1) gemäß einem oder mehreren der obigen Ansprüche, **dadurch gekennzeichnet, dass** die planaren Metalllamellen (8a, 8b, 8c) quer zu der unteren Oberfläche (4) fest positioniert sind, um in der Sicht den Boden des einen oder der mehreren Kanäle (5a, 5b, 5c, 5d) und der Öffnungen (7a, 7b, 7c, 7d, 7e, 7f) zu beeinflussen, und sich über die gesamte Breite des Trägers (3) erstrecken; wobei die Metalllamellen (8a, 8b, 8c) durch die Erhöhungen (6b, 6c, 6d) verlaufen, die sich zwischen den Kanälen (5a, 5b, 5c, 5d) befinden, auch als innere Erhöhungen (6b, 6c, 6d) bezeichnet; wobei die Metalllamellen (8a, 8b, 8c) einen im Wesentlichen rechteckigen Grundriss haben, wobei die freien Enden (9a, 9b, 9c, 9d, 9e, 9f) der Metalllamellen (8a, 8b, 8c) in die Öffnungen (7a, 7b, 7c, 7d, 7e, 7f) der äußeren Erhöhungen (6a, 6e) eingeführt sind.

5. Das Panel (1) gemäß einem oder mehreren der obigen Ansprüche, **dadurch gekennzeichnet, dass** die Befestigungsmittel (10) über ein chemisches oder mechanisches System (11) fest mit den Metalllamellen (8a, 8b, 8c) verbunden und ausgebildet sind, um die Rohrleitung (12) zu blockieren, die wiederum ausgebildet ist, um an den Kanälen (5a, 5b, 5c, 5d) angeordnet zu werden und um die inneren Erhöhungen (6b, 6c, 6d) zu überragen mit einer Krümmung von im Wesentlichen 180° im Übergang von einem der Kanäle zu einem anderen der Kanäle, oder alternativ sich an geeigneten Sitzen anordnend, die wie ein Bogen von im Wesentlichen 180° geformt sind, angebracht an den inneren Erhöhungen (6b, 6c, 6d) zum Zwecke des Übergangs von einem der Kanäle zu einem anderen der Kanäle.

6. Das Panel (1) gemäß einem oder mehreren der obigen Ansprüche, **dadurch gekennzeichnet, dass** die Metalllamellen (8a, 8b, 8c) ausgebildet sind, um den Träger (3) an den langgestreckten Gliedern (13) zu befestigen, die den Tragrahmen (14) bilden, der metallisch und fest mit der Decke (2) verbunden ist; wobei die Befestigung der Metalllamellen (8a, 8b, 8c) an den langgestreckten Gliedern (13) mit Hilfe einer Vielzahl von Befestigungselementen (15) stattfindet, die ausgebildet sind, um an den Öffnungen (7a, 7b, 7c, 7d, 7e, 7f) der äußeren Erhöhungen (6a, 6e) des Trägers (3) angeordnet zu werden, um so die Enden (9a, 9b, 9c, 9d, 9e, 9f) der Metalllamellen (8a, 8b, 8c) zu beeinflussen.

7. Das Panel (1) gemäß einem oder mehreren der obigen Ansprüche, **dadurch gekennzeichnet, dass** ein Metallfilm (16) mit niedrigem Emissionsvermögen fest mit der gesamten unteren Oberfläche (4) des Trägers (3) verbunden ist, ausgenommen der Bereich, der die Befestigungsmittel (10) und die Öffnungen (7a, 7b, 7c, 7d, 7e, 7f) der äußeren Erhöhungen (6a, 6e) umgibt; und ausgebildet ist, um die Leistung des Panels (1) sowohl im Hinblick auf Ausbeute als auch auf Wärmeträgheit zu verbessern.

8. Das Panel (1) gemäß Anspruch 1, **dadurch gekennzeichnet, dass** der Träger (3) eine planare obere Oberfläche (17) hat, die an den äußeren länglichen Umfangskanten mit den Anschlagleisten (18a, 18b) versehen ist und sich über die gesamte Länge des Trägers (3) erstreckt, wobei jede der Anschlagleisten (18a, 18b) eine stufenartige Form mit einer Höhe hat, die im Wesentlichen gleich der Höhe der langgestreckten Glieder (13) ist, und einer Breite, die im Wesentlichen gleich der halben Breite der langgestreckten Glieder (13) ist, so dass das langgestreckte Glied (13) in zwei der Anschlagleisten (18a, 18b) von zwei der nebeneinander angeordneten Panels (1) untergebracht ist.

9. Das Panel (1) gemäß Anspruch 1, **dadurch gekennzeichnet, dass** der Magnetstreifen (19a, 19b), der sich über die gesamte Länge des Trägers (3) erstreckt, über einen doppelten Klebstoff fest mit jeder der Anschlagleisten (18a, 18b) verbunden und mit dem Rahmen (14) fest über ein magnetisches Befestigungssystem verbunden ist, das genügend Anziehungs- und/oder Adhäsionskraft hat, um das Panel (1) während des Positionierschritts befestigt zu halten.

10. Das Panel (1) gemäß Anspruch 1, **dadurch gekennzeichnet, dass** der Träger (3) aus gesintertem geschäumtem Polystyrol, gemischt mit Graphit, besteht.

11. Das Panel (1) gemäß einem oder mehreren der obigen Ansprüche, **dadurch gekennzeichnet, dass** der Träger (3) zunächst, sobald die Befestigungsmittel (10) damit gekoppelt wurden, mit den langgestreckten Gliedern (13) des Rahmens (14) durch die Magnetstreifen (19a, 19b) verbunden werden kann, die magnetisch mit den Anschlagleisten (18a, 18b) verbunden sind, welche komplementär zu den langgestreckten Gliedern (13) geformt sind; wobei der Träger (3) an den langgestreckten Gliedern (13) auch durch Befestigungselemente (15) befestigt wird, welche an den Öffnungen (7a, 7b, 7c, 7d, 7e, 7f) der äußeren Erhöhungen (6a, 6e) des Trägers (3) angebracht sind; wobei die Rohrleitung (12) anschließend mit dem Befestigungsmitteln (10) verbindbar ist, wobei danach ein Verblendpanel mit der unteren Oberfläche (4) des Panels (1) verbindbar ist.

12. Das Panel (1) gemäß Anspruch 1, **dadurch gekennzeichnet, dass** der Träger (3) eine untere Oberfläche (4) hat, die in einem transversalen Querschnitt eine im Wesentlichen planare Form hat, auf welcher ein oder mehrere längliche Kanäle (5a, 5b, 5c, 5d) angebracht sind, die einen Sitz für die Befestigungsmittel (10) und die Rohrleitung (12) bilden.

## Revendications

1. Panneau rayonnant (1) à monter sur un plafond (2), en particulier pour chauffer et refroidir des espaces intérieurs, le panneau rayonnant (1) comportant :
un support (3) sensiblement constitué de polystyrène expansé fritté,
une pluralité de moyens de fixation (10) pour un tuyau (12), et
un cadre de support métallique (14) comportant une pluralité d'éléments longitudinaux (13),
dans lequel une pluralité de lames métalliques (8a, 8b, 8c) est positionnée de manière stable transversalement audit support (3) à la fois pour le support de ladite pluralité de moyens de fixation (10) et pour la fixation dudit support (3) auxdits éléments longitudinaux (13) dudit cadre (14), dans lequel sur les bords périmétriques longitudinaux extérieurs dudit support (3) sont prévues des feuillures (18a, 18b) auxquelles une bande magnétique (19a, 19b) est assemblée de manière stable, lesdites feuillures (18a, 18b) étant formées de manière complémentaire auxdits éléments longitudinaux (13) pour une interconnexion du support (3) audit cadre (14).

2. Panneau (1) selon la revendication 1, **caractérisé en ce que** ledit support (3) a une surface inférieure (4) qui a, en coupe transversale, une configuration sensiblement sinusoïdale de manière à former un ou plusieurs canaux longitudinaux (5a, 5b, 5c, 5d) intercalés entre une ou plusieurs protubérances longitudinales (6a, 6b, 6c, 6d, 6e), tous deux s'étendant le long de toute la longueur de ladite surface inférieure (4).

3. Panneau (1) selon la revendication 2, **caractérisé en ce que** lesdites protubérances (6a, 6e) agencées auxdites extrémités latérales dudit support (3), également appelées protubérances extérieures (6a, 6e), ont, le long d'un même axe transversal, une pluralité d'ouvertures (7a, 7b, 7c, 7d, 7e, 7f), par paires mutuellement opposées, qui ont une profondeur telle qu'elles ont un fond qui se situe sur le fond de chaque canal parmi ledit ou lesdits canaux (5a, 5b, 5c, 5d).

4. Panneau (1) selon une ou plusieurs des revendications précédentes, **caractérisé en ce que** lesdites lames métalliques planes (8a, 8b, 8c) sont positionnées de manière stable transversalement à ladite surface inférieure (4), de manière à affecter en vue le fond dudit ou desdits canaux (5a, 5b, 5c, 5d) et desdites ouvertures (7a, 7b, 7c, 7d, 7e, 7f) et s'étendent le long de toute la largeur dudit support (3), lesdites lames métalliques (8a, 8b, 8c) passant à travers lesdites protubérances (6b, 6c, 6d) intercalées entre lesdits canaux (5a, 5b, 5c, 5d), également appelées protubérances intérieures (6b, 6c, 6d), lesdites lames métalliques (8a, 8b, 8c) ayant une forme plane sensiblement rectangulaire, les extrémités libres (9a, 9b, 9c, 9d, 9e, 9f) desdites lames métalliques (8a, 8b, 8c) étant reçues à l'intérieur desdites ouvertures (7a, 7b, 7c, 7d, 7e, 7f) desdites protubérances extérieures (6a, 6e).

5. Panneau (1) selon une ou plusieurs des revendications précédentes, **caractérisé en ce que** lesdits moyens de fixation (10) sont associés de manière stable auxdites lames métalliques (8a, 8b, 8c) au moyen d'un système chimique ou mécanique (11) et sont adaptées pour bloquer ledit tuyau (12), qui est à son tour adapté pour être agencé sur lesdits canaux (5a, 5b, 5c, 5d) et pour surmonter lesdites protubérances intérieures (6b, 6c, 6d) avec une courbure sensiblement égale à 180° dans la transition de l'un desdits canaux à un autre desdits canaux ou, en variante, s'agençant lui-même sur des logements adaptés qui sont formés comme un arc sensiblement égal à 180° prévu sur lesdites protubérances intérieures (6b, 6c, 6d) pour la transition de l'un desdits canaux à un autre desdits canaux.

6. Panneau (1) selon une ou plusieurs des revendications précédentes, **caractérisé en ce que** lesdites lames métalliques (8a, 8b, 8c) sont adaptées pour fixer le support (3) aux éléments longitudinaux (13) qui constituent ledit cadre de support (14) qui est métallique et assemblé de manière stable audit plafond (2), la fixation desdites lames métalliques (8a, 8b, 8c) auxdits éléments longitudinaux (13) s'opérant au moyen d'une pluralité d'éléments de fixation (15) qui sont adaptés pour être agencés sur lesdites ouvertures (7a, 7b, 7c, 7d, 7e, 7f) desdites protubérances extérieures (6a, 6e) dudit support (3), de manière à affecter lesdites extrémités (9a, 9b, 9c, 9d, 9e, 9f) desdites lames métalliques (8a, 8b, 8c).

7. Panneau (1) selon une ou plusieurs des revendications précédentes, **caractérisé en ce qu'**un film métallisé à faible émissivité (16) est couplé de manière stable sur toute ladite surface inférieure (4) dudit support (3), à l'exception de la zone qui entoure lesdits moyens de fixation (10) et lesdites ouvertures (7a, 7b, 7c, 7d, 7e, 7f) desdites protubérances extérieures (6a, 6e), et est adapté pour améliorer la performance dudit panneau (1) à la fois en termes de rendement et en termes d'inertie thermique.

8. Panneau (1) selon la revendication 1, **caractérisé en ce que** ledit support (3) a une surface supérieure plane (17) pourvue desdites feuillures (18a, 18b) au niveau des bords périmétriques longitudinaux extérieurs et s'étend le long de toute la longueur dudit support (3), chacune desdites feuillures (18a, 18b) ayant une forme analogue à une marche qui a une hauteur qui est sensiblement égale à la hauteur desdits éléments longitudinaux (13) et une largeur qui est sensiblement égale à une demi-largeur desdits éléments longitudinaux (13), de sorte que ledit élément longitudinal (13) est reçu dans deux desdites feuillures (18a, 18b) de deux desdits panneaux (1) agencés côte à côte.

9. Panneau (1) selon la revendication 1, **caractérisé en ce que** ladite bande magnétique (19a, 19b), qui s'étend le long de toute la longueur dudit support (3), est assemblée de manière stable à chacune desdites feuillures (18a, 18b) au moyen d'un double adhésif et est assemblée de manière stable audit cadre (14) au moyen d'un système de fixation magnétique qui a une force d'attraction et/ou d'adhérence telle qu'il maintient ledit panneau (1) fixé pendant l'étape de positionnement.

10. Panneau (1) selon la revendication 1, **caractérisé en ce que** ledit support (3) est constitué de polystyrène expansé fritté mélangé à du graphite.

11. Panneau (1) selon une ou plusieurs des revendications précédentes, **caractérisé en ce que** ledit support (3), une fois que lesdits moyens de fixation (10) ont été couplés à celui-ci, peut être initialement associé auxdits éléments longitudinaux (13) dudit cadre (14) au moyen desdites bandes magnétiques (19a, 19b) qui sont magnétiquement associées auxdites feuillures (18a, 18b) qui sont formées de manière complémentaire auxdits éléments longitudinaux (13), ledit support (3) étant fixé de manière stable auxdits éléments longitudinaux (13) également au moyen desdits éléments de fixation (15), agencés sur lesdites ouvertures (7a, 7b, 7c, 7d, 7e, 7f) desdites protubérances extérieures (6a, 6e) dudit support (3), ledit tuyau (12) pouvant être ensuite associé auxdits moyens de fixation (10), un panneau de finition pouvant ensuite être associé à ladite surface inférieure (4) dudit panneau (1).

12. Panneau (1) selon la revendication 1, **caractérisé en ce que** ledit support (3) a une surface inférieure (4) qui a, en coupe transversale, une forme sensiblement plane sur laquelle sont prévus un ou plusieurs canaux longitudinaux (5a, 5b, 5c, 5d) qui forment un logement pour lesdits moyens de fixation (10) et ledit tuyau (12).
